# EUROPEAN PATENT SPECIFICATION

(11) **EP 2 355 460 B1**
(45) Date of publication and mention of the grant of the patent: **19.02.2014**
(21) Application number: 10193697.9
(22) Date of filing: 03.12.2010
(51) Int. Cl.: H04M 1/02, H04M 1/725

(54) **Detachable wireless communication module and method for activating the same**
Abnehmbares drahtloses Kommunikationsmodul und Verfahren zu dessen Aktivierung
Module de communication sans fil détachable et son procédé d'activation

(30) Priority: 05.02.2010 TW 099103561
(43) Date of publication of application: 10.08.2011
(73) Proprietor: HTC Corporation, Taoyuan County 330 (TW)
(72) Inventor: Li, Chih-Hung, 330, Taoyuan County (TW); Liao, Chia-Hsing, 330, Taoyuan County (TW); Kuan, Tsung-Pao, 330, Taoyuan Contry (TW); Chin, Tung-Liang, 330, Taoyuan County (TW); Kuo, Yung-Hsien, 330, Taoyuan County (TW)
(74) Representative: 2K Patentanwälte Blasberg Kewitz & Reichel

(56) References cited:
- WO-A1-00/65445
- WO-A1-2004/008721
- WO-A1-2006/103510
- US-A1- 2003 146 821
- US-A1- 2008 026 803
- US-A1- 2008 259 551

## Description

This application claims the benefit of Taiwan application Serial No. 99103561, filed February 5, 2010.

### BACKGROUND

### Technical Field

The disclosure relates in general to a detachable wireless communication module and a method for activating the same, and more particularly to a detachable short-range wireless communication module and a method for activating the same.

### Description of the Related Art

When a portable electronic device, such as a mobile phone, a personal digital assistant, a multimedia player or a positioning navigator product, is designed, the designer always has to re-configure the layout on the host circuitry, such as the motherboard of the host, in order to add a new hardware circuit so that the electronic device with the new communication function can be manufactured. For example, a third generation of mobile telephone having a short-range radio frequency module, such as a radio frequency identification module or a near-field communication module, is available in the current market to make the mobile circuit serve as the reader/writer for the radio frequency label or have various application functions for the near-field communication.

In order to add a new communication module, however, the conventional designer or foundry needs to re-design the host circuitry of the electronic device, such as the power supply of the circuit layout of the motherboard. Thus, the new hardware, such as the communication chip or module, can communicate and cooperate with other circuit elements of the electronic device on the motherboard, and the performance satisfying the requirements of the new communication function can be obtained and the user's requirements can be satisfied. Thus, the overall developing cost and time of the electronic device are significantly increased. From the point of view of the manufacturer, the conventional method lacks the flexibility and is disadvantageous to the customized production.

US 2008/0026803 A1 discloses a wireless communication device including a detachable wireless communication module according to the preamble of claim 1. The wireless communication device comprises a first housing that can be detachably connected to a second housing in a first orientation and a second orientation. An electrical connector connects circuitry in the first and second housings regardless of whether the first and second housings are joined together in the first orientation or in the second orientation. A wireless interface connects the circuitry in the first and second housings when the first and second housings are separated to communicate user data and signaling. This permits a user to use the wireless communication device to communicate with remote parties regardless of whether or not the housing sections are jointed together or separated.

WO 2006/103510 A1 discloses an RFID devices comprising an RFID module operable to communicate with an RFID tag. An Interface circuitry Is coupled to the RFID module and operable to enable data communications between the RFID module and a mobile device.

WO 2000/65445 A1 discloses an accessory device connected to a portable computer. The type of accessory may be identified by measuring a voltage of a signal line coupled to the accessory device.

### SUMMARY

It is an object of the present invention to provide an enhanced detachable wireless communication module and activating method enabling an enhanced flexibility In designing and manufacturing electronic devices, adding more application functions to electronic devices, and lower overall costs.

This problem is solved by a detachable wireless communication module according to claim 1 and by a method for activating such a detachable wireless communication module according to claim 9. Further advantageous embodiments are the subject-matter of the dependent claims.

Embodiments of a detachable wireless communication module and a method for activating the same are provided. The wireless communication module has a communication interface detachably connected to an electronic device, and becomes a portion of a casing of the electronic device after being connected to the electronic device. The wireless communication module Is embedded with a short-range radio frequency module, such as a radio frequency identifcation (RFID) module or a near-field communication (NFC) module. Thus, the detachable wireless communication module can bring the flexibility to the processes of designing and manufacturing the electronic device, can speed up the manufacturing process, and can increase the number of applications of the electronic device.

According to a first aspect, a detachable wireless communication module to be connected to a corresponding host connector of an electronic device is provided. The wireless communication module includes a housing, a radio frequency identification module and a module connector. The housing becomes a portion of a casing of the electronic device when the wireless communication module is detachably connected to the electronic device. The radio frequency identification module is embedded into the housing. The module connector is disposed on the housing and detachably connected to the host connector of the electronic device. The module connector includes a plurality of contacts used for communication between the radio frequency identification module and a host circuitry of the electronic device. When the wireless communication module is detachably connected to the electronic device, a first contact of the contacts is connected to a first contact of the host connector to make the first contact of the host connector have a predetermined signal level to indicate that the radio frequency identification module is embedded in the wireless communication module.

According to a second aspect, a detachable wireless communication module to be connected to a corresponding host connector of an electronic device is provided. The wireless communication module includes a housing, a near-field communication module and a module connector. The housing becomes a portion of a casing of the electronic device when the wireless communication module is detachably connected to the electronic device. The near-field communication module is embedded into the housing. The module connector is detachably connected to the host connector of the electronic device. The module connector includes a plurality of contacts used for communication between the near-field communication module and a host circuitry of the electronic device. When the wireless communication module is detachably connected to the electronic device, a first contact of the contacts is connected to a first contact of the host connector to make the first contact of the host connector have a signal level to indicate that the near-field communication module is embedded in the wireless communication module.

According to a third aspect, a method for activating a detachable wireless communication module adapted to an electronic device is provided. The wireless communication module includes a short-range radio frequency module and a module connector. The module connector is detachably connected to a host connector of the electronic device to make the wireless communication module become a portion of a casing of the electronic device. The method includes the following steps. A first voltage signal is provided at a first contact of the host connector. It is detected whether the first contact of the host connector is changed from a first level to a substantially predetermined signal level to determine whether the module connector of the detachable wireless communication module is connected to the host connector and has the short-range radio frequency module. If the first contact of the host connector is changed to the substantially predetermined signal level, it is determined whether a program, which tends to use the detachable wireless communication module, is launched. Then, if the program is launched, a first power signal is provided to the detachable wireless communication module through the host connector, and a communication procedure is performed on the short-range radio frequency module through the host connector to initialize the short-range radio frequency module. After the communication procedure passes, a host circuitry of the electronic device can communicate with the short-range radio frequency module through the host connector so as to use the short-range radio frequency module.

The disclosure will become apparent from the following detailed description of the preferred but non-limiting embodiments. The following description is made with reference to the accompanying drawings.

### BRIEF DESCRIPTION OF THE DRAWINGS

FIG. 1 is a side view showing a detachable wireless communication module and a host device according to an embodiment.

FIG. 2 is a side view showing a detachable wireless communication module and a host device according to another embodiment.

FIG. 3 shows the definitions of contacts of a host connector and a module connector according to an embodiment.

FIG. 4A shows an embodiment for indicating module recognition.

FIG. 4B shows an embodiment, in which a host device outputs an interrupt request signal to a detachable wireless communication module.

FIG. 5 is a flow chart showing a method for activating a detachable wireless communication module according to an embodiment.

### DETAILED DESCRIPTION

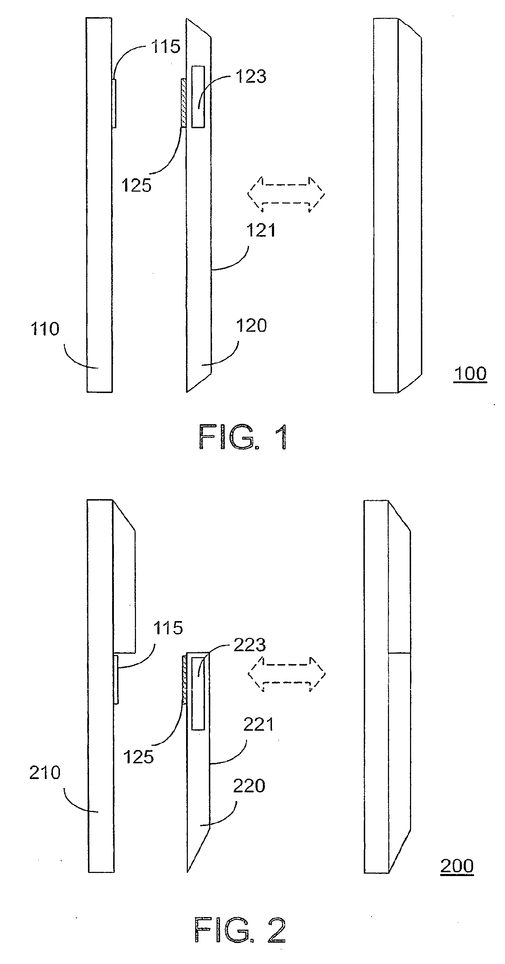

FIG. 1 is a side view showing a detachable wireless communication module 120 and a host device 110 according to an embodiment. As shown in FIG. 1, the detachable wireless communication module 120 is to be detachably connected to a corresponding host connector 115 of the host device 110 to form an electronic device 100. The wireless communication module 120 includes a housing 121, a short-range radio frequency module 123 and a module connector 125. When the wireless communication module 120 is detachably connected to the host device 110, the housing 121 becomes a portion of a casing of the electronic device 100, such as a back cover of the electronic device 100. The short-range radio frequency module 123 is embedded into the housing 121. The module connector 125, disposed on the housing 121, is detachably connected to the host connector 115 of the host device 110, and is used for communication between the short-range radio frequency module 123 and a host circuitry of the host device 110.

FIG. 2 is a side view showing a detachable wireless communication module 220 and a host device 210 according to another embodiment. As shown in FIG. 2, the difference between an electronic device 200 of this embodiment and that of the embodiment of FIG. 1 is that the host device 210 and the wireless communication module 220 have different structures, and a housing 221 of the wireless communication module 220 becomes a portion of the back cover after the host device 210 is connected to the wireless communication module 220.

It is to be noted that, in the two embodiments, the short-range radio frequency module 123 of the detachable wireless communication module 120 and a short-range radio frequency module 223 of the detachable wireless communication module 220 can adopt a radio frequency identification (RFID) module or a near-field communication (NFC) module according to the functional requirement of the electronic device.

For the designing, manufacturing and product assembling of various electronic devices, such as the digital electronic products including a mobile phone, a personal digital assistant, a multimedia player and a positioning navigator, the above-mentioned embodiments can bring the significant convenience and simplify the complicated developing process. If the electronic device 100 is the mobile phone, it is necessary to produce a portion of models A adopting the RFID modules, and another portion of models B adopting the NFC modules. In this case, it is only necessary to produce the two batches of detachable wireless communication modules 120 with the embedded RFID modules and the embedded NFC modules, and to respectively assemble the two batches of detachable wireless communication modules 120 with the host device 110 of the model A and the host device 110 of the model B. Thus, the electronic device 100 of the model A with the RFID module and the electronic device 100 of the model B with the NFC module may be manufactured. When the electronic devices 200 with different styles are to be manufactured, the detachable wireless communication module 220 may also bring the convenience to the manufacturing process.

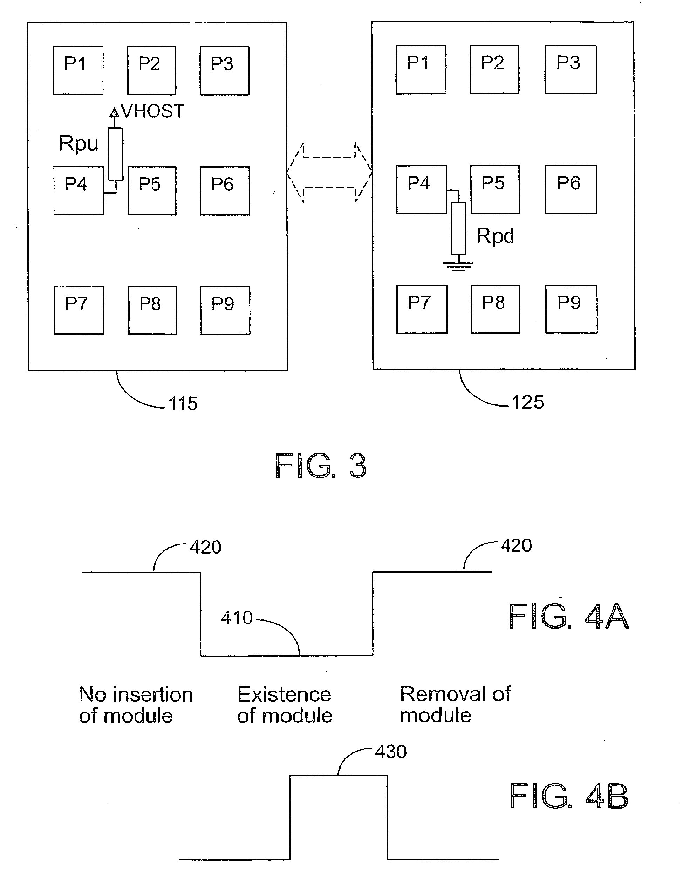

In order to make the short-range radio frequency module of the detachable wireless communication module communicate with the host circuitry of the host device and thus enable the short-range radio frequency module, the host connector 115 and the module connector 125 need to be compatible with the interface of the short-range radio frequency module, and it is further necessary to provide the mechanism of enabling the host device to identify whether the detachable wireless communication module has been inserted and whether the wireless communication module has a certain supported short-range radio frequency module. Regarding the latter, a corresponding contact is defined in each of the host connector 115 and the module connector 125 to provide the module identification mechanism according to an embodiment. FIG. 3 shows the definitions of contacts of the host connector 115 and the module connector 125 according to an embodiment, wherein the two connectors with the same name have to be correspondingly in contact with each other when the connection is created. In example of FIG. 3, the fourth contact P4 is used for the module identification mechanism. Other contacts may also be used to support the communication interfaces supporting the two short-range radio frequency modules, and will be described later.

An example of a module identification mechanism will be described with reference to the contact P4. The host device 110 detects whether the detachable wireless communication module 120 has been connected or inserted through the contact P4. Thus, the contact P4 of the host connector 115, for example, is coupled to a host voltage VHOST, such as a high level voltage 3.3V, through a voltage dividing element Rpu, such as a resistor, and the contact P4 of the module connector 125 is coupled to the low level potential, such as the ground potential, through a voltage dividing element Rpd, such as a resistor. After the host connector 115 and the module connector 125 are connected, the host voltage VHOST is divided by the voltage dividing elements Rpu and Rpd, the contact P4 of the host connector 115 has the divided voltage lower than the host voltage VHOST. For the sake of recognition, this divided voltage may be designed to be lower than the low potential range (lower than 0.6V), which may be detected by the host.

When the host device 110 detects that the voltage of the contact P4 has the high level, it is determined that the wireless communication module 120 is not inserted or cannot be used. When the voltage of the contact P4 detected by the host device 110 has the low level (e.g., lower than 0.6V), it is determined that the detachable wireless communication module 120 has been inserted.

In order to further identify the existence of the short-range radio frequency module in the detachable wireless communication module 120, it is possible to further define different resistance values of the voltage dividing element Rpd of the module connector 125 to generate the mechanism of recognizing the existence of the short-range radio frequency module in the wireless communication module 120 in one embodiment. For example, when the wireless communication module 120 is embedded with the RFID module, the voltage dividing element Rpd is defined as a resistor having X ohms (+/-1%). In addition, when the wireless communication module 120 is embedded with the NFC module, the voltage dividing element Rpd is defined as a resistor having Y ohms (+/-1%), wherein X and Y have different values so that the contact P4 has different potentials. In the electronic device 100 of the model A with the RFID module and the electronic device 100 of the model B with the NFC module, the above-mentioned method may be adopted to the implementation, or may be expanded so that it can be applied to recognize more modules. In other application conditions, of course, it is sufficient to recognize whether the contact P4 has a substantially predetermined signal level if it is only needed to recognize whether the wireless communication module 120 is inserted.

In addition to the module recognition mechanism, the communication interface for communicating the short-range radio frequency module of the detachable wireless communication module with the host circuitry of the host device will be described in the example of FIG. 3. For example, the host connector 115 needs to provide the contact for the communication interface, the power associated contact and the handshaking contact. If the detachable wireless communication modules 120 and 220 have to be embedded with one of two short-range radio frequency modules, such as RFID and NFC modules, the host connector 115 and the module connector 125 need to provide two communication interfaces for supporting them. One of the communication interfaces corresponds to the contact of a two-wire universal asynchronous receiver transmitter, and the other communication interface corresponds to a single wire protocol (SWP).

As shown in FIG. 3, the contacts P1 to P9 in one embodiment are defined in the following Table 1:

**Table 1**

| Contact | Contact name | Power/input/output |
|---|---|---|
| P1 | V_MODULE | Power (output) |
| P2 | MODULE_INT# | Input |
| P3 | GND | Power |
| P4 | MODULE_REQ_ID# | Input/output |
| P5 | UART_RX | Input |
| P6 | UART_TX | Output |
| P7 | PMUVCC | Power (output) |
| P8 | SIMVCC | Power (input) |
| P9 | SWP | Input/output |

In Table 1, the definition of input or output is made based on the angle of the host device. In addition, the contacts P1 to P6 are sufficient to provide the communication with the RFID module. The contacts P7 to P9 provide the communication with the NFC module. Because the NFC specification is compatible with the RFID-based contactless communication specification, the NFC and RFID specifications have compatible portions. So, when the host device communicates with the NFC module, the contacts P1 to P9 have to be used. The function of each contact is described in the following. The contact P1 is a power supply terminal used to let the host device supply the digital power to the module (i.e., the communication module). The contact P2 is used for the module to output the interrupt request signal to the host device, wherein the low level represents the enabled state, for example. The contact P3 is a ground terminal, which is to be grounded. The contact P4 is defined to let the host device output the interrupt request signal to the module, wherein the high level represents the enabled state, for example. The contacts P5 and P6 are used for the universal asynchronous receiver transmitter (UART). For example, the UART receiving end (RX: receiver) of the host device 110 is connected to the UART transmitting end (TX: transmitter) of the module through the contact P5, and the UART transmitting end of the host device 110 is connected to the UART receiving end of the module through the contact P6. The contact P7 is a power supply terminal used to let the subscriber identify module (SIM) of the host device provide the power to the communication module. The contact P8 is a power supply terminal used to receive the power outputted from the communication module to the SIM of the host device. The contact P9 is used to serve as the data link for the SWP of NFC. In addition, the functions of the contacts are defined in order to satisfy the communication interfaces defined by the RFID and NFG specifications, and may be designed according to the associated specification in practice to satisfy the circuit requirements. For example, the contact P1 of the host device 110 can provide the power with the voltage of about 3.3V and the maximum output current of 300mA when the short-range radio frequency module needs to be enabled.

In the above-mentioned embodiment, the contact P4 of the contacts P1 to P9 is further used to implement the above-mentioned module recognition mechanism. Thus, the contact P4 serves as the input terminal of the host device 110 when the host device 110 is connected to or inserted into the wireless communication module 120. Correspondingly, the contact P4 of the module connector 125, when being connected to or inserted into the contact P4 of the host connector 115, has to drop the potential of the contact P4 to a low level. For example, as shown in FIG. 4A, the level indicated by 420 is dropped to the low level 410. When the host device 110 needs to output the interrupt request signal to the communication module, the contact P4 is changed to serve as the output terminal (e.g., the high level represents the enabled state). So, the pulse with the predetermined width (e.g., 100us) serves as the interrupt signal, as indicated by the pulse 430 of FIG. 4B.

In addition, in some embodiments, the module recognition mechanism using the contact P4 may be modified into another module recognition mechanism using another suitable contact, or another dedicated contact may be adopted. For example, an additional contact P10 may be further defined without the use of the contact P4 having the composite input and output functions.

The number, the arrangement and the definitions of the contacts in the above-mentioned embodiment are only made for the sake of illustration, so another aspect may be adopted for the implementation. For example, in other applications, if it is only necessary to recognize whether the wireless communication module 120 with the embedded RFID module is inserted, it is sufficient to recognize whether the contact P4 has a substantially predetermined signal level, and to define only the contacts P1 to P6.

Altogether, the module connector 125 of the detachable wireless communication module 120 or 220 having the design of making the host device 110 perform the module detection can be regarded as being capable of implementing the embodiment.

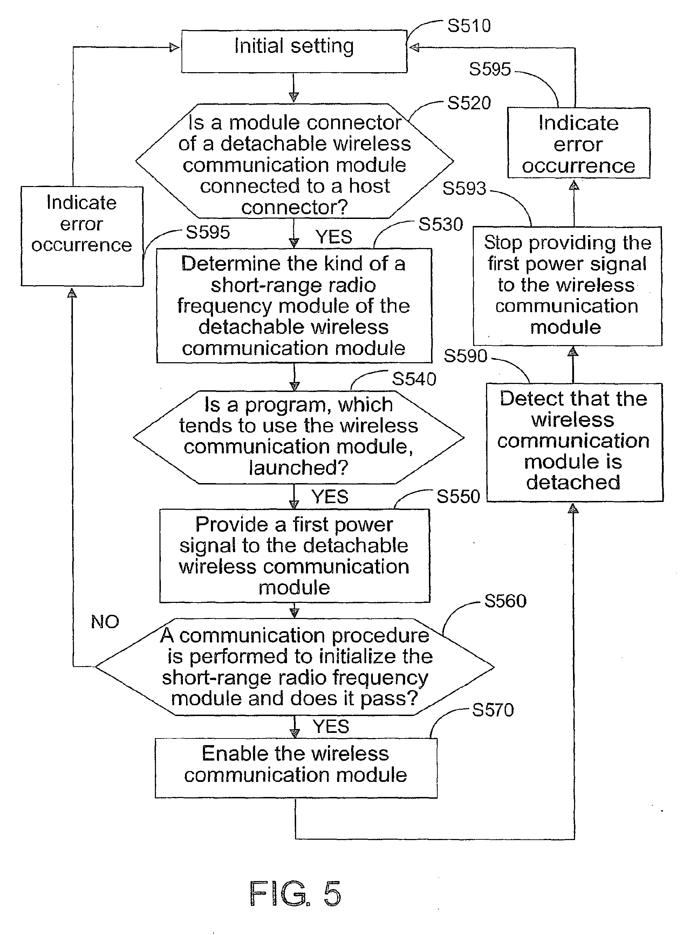

FIG. 5 is a flow chart showing a method for activating a detachable wireless communication module according to an embodiment. As shown in FIG. 5, the method is adapted to an electronic device, such as the electronic device 100 or 200. The embodiment of FIG. 5 includes the module identification mechanism and an activating mechanism.

In FIG. 5, the module recognition mechanism includes the following steps. As shown in step S510, the initial setting is performed. A first voltage signal is provided at a first contact of the host connector to assist in the recognition. For example, a high level voltage is provided at the contact P4 of the host connector 115 in FIG. 3. At this time, the host device 110 does not supply the power to the contact P1. That is, the potential of V_MODULE is 0V. In step S520, it is determined whether the module connector of the detachable wireless communication module is connected to the host connector. For example, it is detected whether the first voltage signal at the first contact (e.g., contact P4) of the host connector 115 is changed from the first level to a substantially low level, as shown in FIG. 4A. In step S530, the kind of the short-range radio frequency module of the detachable wireless communication module is determined. For example, in the embodiment corresponding to FIG. 3, the model A and the model B are manufactured, and the detachable wireless communication module 120 needs to be embedded with one of the RFID module and the NFC module. In this case, the resistance of the voltage dividing element Rpd coupled to the contact P4 of the module connector 125 may be designed so that different low levels may be obtained to identify the RFID module and the NFC module. In addition, in another example, the step S530 may be omitted if the detachable wireless communication module 120 only needs a short-range radio frequency module to satisfy the requirements of manufacturing the electronic device 100.

In FIG. 5, after the module identification mechanism, the host device waits for the timing of enabling the wireless communication module 120. For example, the determination may be made according to whether a program (daemon program, system program, or application program), which tends to use the wireless communication module, has been launched, as shown in step S540. As shown in step S550, if the associated program has been launched, a first power signal is provided to the detachable wireless communication module through the host connector in order to drive the short-range radio frequency module. For example, the host device 110 provides the power of 3.3V to the wireless communication module through the contact P1 (i.e., V_MODULE) of the host connector 115 of FIG. 3. Next, as shown in step S560, a communication procedure is performed on the short-range radio frequency module through the host connector to initialize the short-range radio frequency module. For example, if the short-range radio frequency module is the RFID module, the handshaking procedure, such as UART, is performed through the contacts P5 and P6. In another example, if the short-range radio frequency module is the NFC module, then the handshaking procedure, such as UART, or the initial communication procedure of SWP is performed through the contacts P5 and P6 and the contact P9. After the communication procedure passes (i.e. after the communication procedure is completed successfully), as shown in step S570, the host circuitry of the electronic device can communicate with the short-range radio frequency module through the host connector to enable the short-range radio frequency module. For example, in the condition where the program is executed, the host device can output the interrupt request signal, when needed, through the contact P4 (i.e., MODULE_REQ_ID#) to apply the function of the short-range radio frequency module. In addition, when the short-range radio frequency module needs to request the controller of the host device, the interrupt request signal may be outputted through the contact P2 (i.e., MODULE_INT#).

In addition, in other embodiments, if the wireless communication module 120 is removed or detached in the steps S540 to S560 (i.e., it is detected that the wireless communication module is detached in the block S590), as shown in FIG. 4A (i.e., when the case where the low level 410 is changed to the high level 420 occurs), the host device 110 has to stop supplying the first power signal to the wireless communication module, as shown in step S593. For example, the contact P1 (i.e., V_MODULE) of the host connector 115 provides the voltage changed from 3.3V to 0V. In another embodiment, as shown in step S595, the host device 110 can indicate the error occurrence by way of, for example, sound or displayed frames.

In the above-mentioned embodiment, the wireless communication module 120 is embedded with the short-range radio frequency module, which is the RFID module or the NFC module serving as an example. Thus, after the host device 110 is connected to the detachable wireless communication module 120, the function of the host device 110 can be increased.

For example, when the wireless communication module 120 according to the embodiment is embedded with the RFID module (reader or writer module) and after the host device 110 is connected to the wireless communication module 120, the electronic device 100 can read or write the data of the RFID level on the external object. The RFID label application mainly focuses on the filed of the supply material flow, and may extend to other field of the daily life, such as electronic bill or an electronic key.

For example, when the wireless communication module 120 according to the embodiment is embedded with the NFC module and after the host device 110 is connected to the wireless communication module 120, the electronic device 100 can enable the apparatus to perform the non-contact peer-to-peer communication, read/write the non-contact card, and simulate the non-contact card in conjunction with the safety chip by way of NFC. At present, the ISO standards for the interface and the communication protocol relating to the NFC have been established. The NFC apparatus may serve as a non-contact smart card, a reader/writer terminal of a smart card and an apparatus-to-apparatus data transmission link. Thus, there are many application types, such as the entrance security control or traffic/activity ticket checking, in which the user only needs to move the apparatus, which stores the ticket or entrance guard program codes, to approach the reader. It is also adapted to the simple data capturing application, such as the application of reading the web address from the intelligent label on the poster. Regarding the application of the mobile payment, the user has to input the password to verify the transaction, or only accept the transaction. In addition, the NFC further has the following peer-to-peer data transmission function. Two apparatuses (e.g., two electronic devices 100) supporting the NFC are connected together to perform the peer-to-peer network data transmission, such as music downloading, image exchanging, synchronous processing of the address book or the like. In addition, the NFC apparatus can provide more than one functions, and the consumer can explore the apparatus functions to find the latent functions and services of the NFC apparatus.

The above embodiments disclose a detachable wireless communication module and an activating method thereof. The detachable wireless communication module brings the flexibility in designing and manufacturing the electronic device, adds more application functions to the electronic device, and can lower the overall cost.

While the disclosure has been described by way of example and in terms of preferred embodiments, it is to be understood that the disclosure is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. A detachable wireless communication module (120) configured to be connected to a corresponding host connector (115) of an electronic device (100), the wireless communication module (120) comprising:
a housing (121);
a short-range radio frequency module (123) embedded into the housing (121); and
a module connector (125) disposed on the housing (121) and configured to be detachably connected to the host connector (115) of the electronic device (100); wherein
the housing (121) becomes a portion of a casing of the electronic device (100) when the wireless communication module (120) is detachably connected to the electronic device (100), and
the module connector (125) comprises a plurality of contacts (P1-P7) used for communication between the short-range radio frequency module (123) and a host circuitry of the electronic device (100),
**characterized in that** said wireless communication module (120) is configured such that
a first contact (P4) of the module connector (125) is connected to a first contact (P4) of the host connector (115) and to make the first contact (P4) of the host connector (115) have a predetermined signal level for indicating the kind of the short-range radio frequency module (123) embedded in the wireless communication module (120), when the wireless communication module (120) is detachably connected to the electronic device (100),
wherein the first contact (P4) is defined to let the host device (110) output an Interrupt request signal to the wireless communication module (120) when the host circuitry of the electronic device (100) indicates the existence of the short-range radio frequency module (123) according to the signal level.

2. The wireless communication module according to claim 1, wherein the contacts of the module connector (125) comprise a host interrupt request input terminal; and wherein, when the wireless communication module is detachably connected to the electronic device, the first contact is the host interrupt request input terminal.

3. The wireless communication module according to any of the preceding claims, wherein the module connector (125) further comprises at least one voltage dividing element (Rpd) coupled to the first contact of the module connector (125), and when the wireless communication module is detachably connected to the electronic device, the first contact of the module connector makes the first contact of the module connector have the predetermined signal level according to an electric signal provided by the first contact of the host connector.

4. The wireless communication module according to any of the preceding claims, wherein the detachable wireless communication module (120) is a detachable back cover of the electronic device.

5. The wireless communication module according to any one of claims 1 to 5, wherein the short-range radio frequency module (123) is a radio frequency identification RFID module, and wherein the contacts comprise a power supply terminal, a ground terminal, a module transmitting end, a module receiving end, a module interrupt request output terminal and a host interrupt request input terminal.

6. The wireless communication module according to any one of claims 1 to 5, wherein the short-range radio frequency module (123) is a near-field communication NFC module, and wherein the contacts comprise a first power supply terminal, a ground terminal, a module transmitting end, a module receiving end, a module interrupt request output terminal, a host interrupt request input terminal, a second power supply terminal, a third power supply terminal and a single wire communication end.

7. The wireless communication module according to any claims 1 to 5, wherein the short-range radio frequency module (123) can adopt a first radio frequency module or a second radio frequency module and wherein the wireless communication module (120) is further configured that a first contact of the host connector (115) has
a first predetermined signal level when the first radio frequency module is embedded into the housing (121) and the module connector (125) of the wireless communication module (120) is connected to the host connector (115) of the electronic device (100), and
a second predetermined signal level, which is different from the first predetermined signal level, when the second radio frequency module is embedded into the housing (121) and the module connector (125) of the wireless communication module (120) is connected to the host connector (115) of the electronic device (100).

8. A method for activating a detachable wireless communication module (120) adapted to be detachably connected to an electronic device (100), wherein the wireless communication module (120) comprises a short-range radio frequency module (123) and a module connector (125) and the module connector (125) is configured to be detachably connected to a host connector (116) of the electronic device (100) so that the wireless communication module (120) become a portion of a casing of the electronic device (100), the method comprising:
providing a first voltage signal at a first contact (P4) of the host connector (115);
detecting whether the first voltage signal at the first contact (P4) of the host connector (115) is changed from a first level to a predetermined signal level to determine whether the module connector (125) of the detachable wireless communication module (120) is connected to the host connector (115) and the short-range radio frequency module (123) is embedded in the wireless communication module (120);
if the first voltage signal at the first contact (P4) of the host connector (115) is changed to the predetermined signal level:
determining the kind of the short-range radio frequency module (123) of the detachable wireless communication module (120);
determining whether a program, which uses the detachable wireless communication module (120), is launched; and
if the program is launched, providing a first power signal to the detachable wireless communication module (120) through the host connector (115), and performing a communication procedure on the short-range radio frequency module (123) through the host connector (115) to initialize the short-range radio frequency module (123);
wherein after the communication procedure passes, a host circuitry of the electronic device (100) can communicate with the short-range radio frequency module (123) through the host connector (115) so as to use the short-range radio frequency module (123),
wherein an interrupt request signal is output by the host device (100) to the wireless communication module (120) via the first contact (P4) when the host circuitry of the electronic device (100) Indicates the existence of the radio frequency module (123) according to the signal level.

9. The method according to claim 8, wherein after the communication procedure passes, an interrupt request signal is transmitted to the short-range radio frequency module using the first contact of the module connector.

10. The method according to claim 9, wherein the interrupt request signal is a pulse.

11. The method according to any of claims 8 to 10, wherein the host connector comprises a host interrupt request input terminal; and wherein, when the wireless communication module is detachably connected to the electronic device, the first contact is the host interrupt request input terminal.

12. The method according to any one of claims 8 to 11, wherein the short-range radio frequency module is a radio frequency identification RFID module.

13. The method according to any one of claims8 to 11, wherein the short-range radio frequency module is a near-field communication NFC module.

14. The method according to any of claims 8 to 13, wherein the short-range radio frequency module (123) can adopt a first radio frequency module or a second radio frequency module and wherein the step of determining the kind of the short-range radio frequency module (123) of the detachable wireless communication module (120) comprises:
determining the short-range radio frequency module (123) to be the first radio frequency module if the predetermined signal level is a first predetermined signal level; and
determining the short-range radio frequency module (123) to be the second radio frequency module if the predetermined signal level is a second predetermined signal level, wherein the second predetermined signal level is different from the first predetermined signal level.

## Patentansprüche

1. Abnehmbares drahtloses Kommunikationsmodul (120), welches ausgelegt ist, um mit einem entsprechenden Hauptcomputer-Verbinder (115) eines elektronischen Geräts (100) verbunden zu werden, wobei das abnehmbare drahtlose Kommunikationsmodul (120) umfasst:
ein Gehäuse (121);
ein kurzreichweitiges Hochfrequenz-Modul (123), das in dem Gehäuse (121) aufgenommen ist; und
einen Modul-Verbinder (125), der auf bzw. an dem Gehäuse (121) vorgesehen ist und ausgelegt ist, um lösbar mit dem Hauptcomputer-Anschluss (115) des elektronischen Geräts (100) verbunden zu werden; wobei
das Gehäuse (121) zu einem Teil eines Gehäuses des elektronischen Geräts (100) wird, wenn das drahtlose Kommunikationsmodul (120) lösbar mit dem elektronischen Gerät (100) verbunden ist, und
der Modul-Verbinder (125) eine Mehrzahl von Kontakten (P1-P7) aufweist, die für die Kommunikation zwischen dem kurzreichweitigen Hochfrequenz-Modul (123) und einer Hauptrechner-Schaltung des elektronischen Geräts (100) verwendet werden,
**dadurch gekennzeichnet, dass** das drahtlose Kommunikationsmodul (120) ausgelegt ist, so dass die
ein erster Kontakt (P4) des Modul-Verbinders (125) mit einem ersten Kontakt (P4) des Hauptcomputer-Anschlusses (115) verbunden ist und bewirkt wird, dass der erste Kontakt (P4) des Hauptcomputer-Anschlusses (115) einen vorbestimmten Signalpegel annimmt, um die Art des kurzreichweitigen Hochfrequenz-Moduls (123) anzuzeigen, das in dem drahtlose Kommunikationsmodul (120) aufgenommen ist, wenn das drahtlose Kommunikationsmodul (120) lösbar mit dem elektronischen Gerät (100) verbunden ist,
wobei der erste Kontakt (P4) festgelegt ist um zu veranlassen, dass der Hauptcomputer (110) ein Interrupt-Anforderungssignal an das drahtlose Kommunikationsmodul (120) ausgibt, wenn die Hauptcomputer-Schaltung des elektronischen Geräts (100) das Vorhandensein des kurzreichweitigen Hochfrequenz-Moduls (123) entsprechend dem Signalpegel anzeigt.

2. Abnehmbares drahtloses Kommunikationsmodul nach Anspruch 1, wobei die Kontakte des Modul-Verbinders (125) einen Hauptcomputer-Interrupt-Anforderungssignal-Eingangsanschluss aufweisen; und wobei, wenn das drahtlose Kommunikationsmodul lösbar mit dem elektronischen Gerät verbunden ist, der erste Kontakt der Hauptcomputer-Interrupt-Anforderungssignal- Eingangsanschluss ist.

3. Abnehmbares drahtloses Kommunikationsmodul nach einem der vorhergehenden Ansprüche, wobei der Modul-Verbinder (125) weiterhin mindestens ein Spannungsteiler-Element (Rpd) aufweist, das mit dem ersten Kontakt des Modul-Verbinders (125) verbunden ist, und dann, wenn das drahtlose Kommunikationsmodul lösbar mit dem elektronischen Gerät verbunden ist, der erste Kontakt des Modul-Verbinders bewirkt, dass der erste Kontakt des Modul-Verbinders den vorbestimmten Signalpegel entsprechend einem elektrischen Signal aufweist, das von dem ersten Kontakt des Hauptcomputer-Anschlusses bereitgestellt wird.

4. Abnehmbares drahtloses Kommunikationsmodul nach einem der vorhergehenden Ansprüche, wobei das abnehmbare drahtlose Kommunikationsmodul (120) eine lösbare hintere Abdeckung des elektronischen Geräts ist.

5. Abnehmbares drahtloses Kommunikationsmodul nach einem der Ansprüche 1 bis 5, wobei das kurzreichweitige Hochfrequenz-Modul (123) ein Hochfrequenz-Identifikations-(RFID) Modul ist und wobei die Kontakte einen Stromversorgungsanschluss, einen Masseanschluss, eine Modul-Sendeseite, eine Modul-Empfangsseite, einen Modul-Interrupt-Anforderungssignal-Ausgangsanschluss und einen Hauptcomputer-Interrupt-Anforderungssignal-Eingangsanschluss umfassen.

6. Abnehmbares drahtloses Kommunikationsmodul nach einem der Ansprüche 1 bis 5, wobei das kurzreichweitige Hochfrequenz-Modul (123) ein Nahfeld-Kommunikations-(NFC) Modul ist, und wobei die Kontakte einen ersten Stromversorgungsanschluss, einen Masseanschluss, eine Modul-Sendeseite, eine Modul-Empfangsseite, einen Modul-Interrupt-Anforderungssignal-Eingangsanschluss, einen zweiten Stromversorgungsanschluss, einen dritten Stromversorgungsanschluss und eine eindrahtige Kommunikationsseite umfassen.

7. Abnehmbares drahtloses Kommunikationsmodul nach einem der Ansprüche 1 bis 5, wobei das kurzreichweitige Hochfrequenz-Modul (223) ein erstes Hochfrequenz-Modul oder ein zweites Hochfrequenz-Modul einsetzt und wobei das drahtlose Kommunikationsmodul (120) weiterhin ausgelegt ist, sodass ein erster Kontakt des Hauptcomputer-Anschlusses (115)
einen ersten vorbestimmten Signalpegel aufweist, wenn das erste Hochfrequenz-Modul in dem Gehäuse (121) aufgenommen ist und der Modul-Verbinder (125) des drahtlosen Kommunikationsmoduls (120) mit dem Hauptcomputer-Anschluss (115) des elektronischen Geräts verbunden (100) ist, und
einen zweiten vorbestimmten Signalpegel aufweist, der verschieden ist zu dem ersten vorbestimmten Signalpegel, wenn das zweite Hochfrequenz-Modul in dem Gehäuse (121) aufgenommen ist und der Modul-Verbinder (125) des drahtlosen Kommunikationsmoduls (120) mit dem Hauptcomputer-Anschluss (115) des elektronischen Geräts verbunden (100) ist.

8. Verfahren zum Aktivieren eines abnehmbaren drahtlosen Kommunikationsmodul (120), welches ausgelegt ist, um lösbar mit einem elektronischen Gerät (100) verbunden zu werden, wobei das drahtlose Kommunikationssystem (120) ein kurzreichweitiges Hochfrequenz-Modul (123) und einen Modul-Verbinder (125) aufweist und der Modul-Verbinder (125) ausgelegt ist, um lösbar mit einem Hauptcomputer-Verbinder (115) des elektronischen Geräts (100) so verbunden zu werden, dass das drahtlose Kommunikationsmodul (120) zu einem Teil eines Gehäuses des elektronischen Geräts (100) wird, wobei das Verfahren umfasst:
Bereitstellen einer ersten Spannung an einem ersten Kontakt (P4) des Hauptcomputer-Verbinders (115);
Erfassen, ob das erste Spannungssignal an dem ersten Kontakt (P4) des Hauptcomputer-Verbinders (115) von einem ersten Pegel zu einem vorbestimmten Signalpegel geändert wird, um zu bestimmen, ob der Modul-Verbinder (125) des abnehmbaren drahtlosen Kommunikationsmoduls (120) mit dem Hauptcomputer-Verbinder (115) verbunden ist und das kurzreichweitige Hochfrequenz-Modul (123) in dem drahtlosen Kommunikationsmodul (120) aufgenommen ist; wobei
wenn das erste Spannungssignal an dem ersten Kontakt (P4) des Hauptcomputer-Verbinders (115) zu dm vorbestimmten Signalpegel geändert wird:
die Art des kurzreichweitigen Hochfrequenz-Moduls (123) des abnehmbaren drahtlosen Kommunikationsmoduls (120) bestimmt wird;
bestimm wird, ob ein Programm gestartet wird, welches das abnehmbare drahtlose Kommunikationsmodul (120) verwendet; und
wenn das Programm gestartet wird, ein erstes Spannungssignal dem abnehmbaren drahtlosen Kommunikationsmodul (120) über den Hauptcomputer-Verbinder (115) zur Verfügung gestellt wird und eine Kommunikationsprozedur auf dem kurzreichweitigen Hochfrequenz-Modul über den Hauptcomputer-Verbinder (115) ausgeführt wird, um das kurzreichweitige Hochfrequenz-Moduls (123) zu initialisieren;
wobei, nachdem die Kommunikationsprozedur ausgeführt ist, eine Hauptcomputer-Schaltung des elektronischen Geräts (100) mit dem kurzreichweitigen Hochfrequenz-Modul (123) über den Hauptcomputer-Verbinder (115) kommunizieren kann, um das kurzreichweitige Hochfrequenz-Modul (123) zu verwenden,
wobei ein Interrupt-Anforderungssignal an das drahtlose kommunikationsmodul (120) über den ersten Kontakt ausgegeben wird, wenn die Hauptcomputer-Schaltung des elektronischen Geräts (100) das Vorhandensein des kurzreichweitigen Hochfrequenz-Moduls (123) entsprechend dem Signalpegel anzeigt.

9. Verfahren nach Anspruch 8, wobei, nachdem die Kommunikationsprozedur ausgeführt ist, ein Interrupt-Anforderungssignal an das kurzreichweitige Hochfrequenz-Moduls (123) unter Verwendugn des ersten Kontakts des Modul-Verbinders übermittelt wird.

10. Verfahren nach Anspruch 9, wobei das Interrupt-Anforderungssignal ein Impulssignal ist.

11. Verfahren nach einem der Ansprüche 8 bis 10, wobei die Host-Schnittstelle eine Mehrzahl Unterbrechungsanforderung Eingangsanschluß aufweist, und wobei, wenn das drahtlose Kommunikationsmodul lösbar mit der elektronischen Vorrichtung verbunden ist, ist der erste Kontakt der Host Unterbrechungsanforderung Eingangsanschluss.

12. Verfahren nach einem der Ansprüche 8 bis 11, wobei das kurzreichweitige Hochfrequenz-Modul ein Hochfrequenz-Identifikations-(RFID) Modul ist.

13. Verfahren nach einem der Ansprüche 8 bis 11, wobei das kurzreichweitige Hochfrequenz-Modul ein Nahfeld-Kommunikations-(NFC) Modul ist.

14. Verfahren nach einem der Ansprüche 8 bis 13, wobei das kurzreichweitige Hochfrequenz-Modul (223) ein erstes Hochfrequenz-Modul oder ein zweites Hochfrequenz-Modul einsetzt und wobei der Schritt des Bestimmens der Art des kurzreichweitigen Hochfrequenz-Moduls (123) des abnehmbares drahtlosen Kommunikationsmoduls (120) umfasst:
eine Festlegung, dass das kurzreichweitige Hochfrequenz-Modul (123) das erste Hochfrequenz-Modul ist, wenn der vorbestimmte Signalpegel ein erster vorbestimmter Signalpegel ist; und
eine Festlegung, dass das kurzreichweitige Hochfrequenz-Modul (123) das zweite Hochfrequenz-Modul ist, wenn der vorbestimmte Signalpegel ein zweiter vorbestimmter Signalpegel ist, wobei der zweite vorbestimmte Signalpegel verschieden ist zu dem ersten vorbestimmten Signalpegel.

## Revendications

1. Un module de communication sans fil détachable (120) configuré pour être connecté à un connecteur hôte correspondant (115) d'un dispositif électronique (100), le module de communication sans fil (120) comprend :
un logement (121) ;
un module de fréquence radio à portée courte (123) disposé au sein du logement (121) ; et
un connecteur de module (125) disposé sur le logement (121) et configuré pour être connecté de manière détachable au connecteur hôte (115) du dispositif électronique (100) ; dans lequel
le logement (121) devient une partie d'un corps du dispositif électronique (100) dans lequel le module de communication sans fil (120) est connecté de manière détachable au dispositif électronique (100) ; et
le connecteur de module (125) comporte une pluralité de contacts (P1-P7) utilisés pour la communication entre le module de fréquence radio à courte portée (123) et un circuit hôte du dispositif électronique (100).
**caractérisé en ce que** ledit module de communication sans fil (120) est configuré de telle manière à ce que :
un premier contact (P4) du connecteur de module (125) est connecté à un premier contact (P4) du connecteur central (115) et **en ce que** le premier contact (P4) du connecteur hôte (115) comporte un niveau de signal prédéterminé pour indiquer le type de module de fréquence radio à courte portée (123) qui est disposé dans le module de communication sans fil (120), lorsque le module de communication sans fil (120) est connecté de manière détachable au dispositif électronique (100),
dans lequel le premier contact (P4) est défini pour laisser le dispositif hôte (110) générer un signal de requête d'interruption à l'attention du module de communication sans fil (120) lorsque le circuit hôte du dispositif électronique (100) indique la présence du module de fréquence radio à courte portée (123) en fonction du niveau de signal.

2. Le module de communication sans fil selon la revendication 1, dans lequel les contacts du connecteur de module (125) comporte une borde d'entrée de requête d'interruption hôte ; et dans lequel, lorsque le module de communication sans fil est connecté de manière détachable au dispositif électronique, le premier contact est l'électrode d'entrée de requête d'interruption hôte.

3. Le module de communication sans fil selon l'une quelconque des revendications précédentes, dans lequel le connecteur de module (125) comporte en outre au moins un élément diviseur de tension (Rpd) couplé au premier contact du connecteur de module (125), et dans lequel, lorsque le module de communication sans file est connecté de manière détachable au dispositif électronique, le premier contact du connecteur de module est tel qu'il présente le niveau de signal prédéterminé en fonction du signal électrique fourni par le premier contact du connecteur hôte.

4. Le module de communication sans fil selon l'une quelconque des revendications précédentes dans lequel le module de communication sans fil détachable (120) est un couvercle arrière détachable du dispositif électronique.

5. Le module de communication sans fil selon l'une quelconque des revendications 1 à 5, dans lequel le module de fréquence radio à courte portée (123) est un module d'identification de fréquence radio (RFID), et dans lequel les contacts comportent une électrode d'alimentation électrique, une électrode de terre, une terminaison de transmission de module, une terminaison de réception de module, une électrode de sortie de requête d'interruption de module et une électrode d'entrée de requête d'interruption hôte.

6. Le module de communication sans fil selon l'une quelconque des revendications 1 à 5, dans lequel le module de fréquence radio à courte portée (123) est un module de communication de champ proche (NFC), et dans lequel les contacts comportent une électrode d'alimentation électrique, une électrode de terre, une terminaison de transmission de module, une terminaison de réception de module, une électrode de d'entrée de requête d'interruption hôte, une seconde électrode d'alimentation électrique, une troisième électrode d'alimentation électrique et une terminaison de communication à conducteur unique.

7. Le module de communication sans fil selon l'une quelconque des revendications 1 à 5, dans lequel le module de fréquence radio à courte portée (123) peut adopté un premier module de fréquence radio ou un second module de fréquence radio et dans lequel le module de communication sans fil (120) est configuré en outre de manière à ce qu'un premier contact du connecteur hôte (115) dispose :
un premier niveau de signal prédéterminé lorsque le premier module de fréquence radio est disposé au sein du logement (121) et que le connecteur de module (125) du module de communication sans fil (120) est connecté au connecteur hôte (115) du dispositif électronique (100), et
un second niveau de signal prédéterminé, qui est différent du premier niveau de signal prédéterminé, lorsque le second module de fréquence radio est disposé dans le logement (121) et que le connecteur de module (125) du module de communication sans fil (120) est connecté au connecteur hôte (115) du dispositif électronique.

8. Une méthode d'activation d'un module de communication sans fil détachable (120) adapté pour être connecté de manière détachable à un dispositif électronique (100), dans lequel le module de communication sans fil (120) comprend un module de fréquence radio à portée courte (123) et un connecteur de module (125) et le connecteur de module (125) est configuré pour être connecté de manière détachable à un connecteur hôte (115) du dispositif électronique (100) de telle façon que le module de communication sans fil (120) devient une partie du corps du dispositif électronique (100), la méthode comportant:
la fourniture d'un premier signal de tension à un premier contact (P4) du connecteur hôte (115) ;
la détection que le premier signal de tension sur le premier contact (P4) du connecteur hôte (115) varie d'un premier niveau à un niveau de signal prédéterminé pour déterminer que le connecteur de module (125) du module de communication sans fil détachable (120) est connecté au connecteur hôte (115) et que le module de fréquence radio à courte portée (123) est disposé dans le module de communication sans fil (120) ;
lorsque le premier signal de tension sur le premier contact (P4) du connecteur hôte (115) varie vers le niveau de signal prédéterminé :
la détermination du type de module de fréquence radio à courte portée (123) du module de communication sans fil détachable (120) ;
la détermination qu'un programme, utilisant le module de communication sans fil détachable (120), est lancé ; et
en cas de lancement du programme, la fourniture d'un premier signal de puissance au module de communication sans file détachable (120) au travers du connecteur hôte (115), et la mise en oeuvre d'une procédure de communication sur le module de fréquence radio à courte portée (123) au travers le connecteur hôte (115) pour initialiser le module de fréquence radio à courte portée (123) ;
dans lequel à la suite de la procédure de communication, un circuit hôte du dispositif électronique (100) peut communiquer avec le module de fréquence radio à courte portée (123) au travers le connecteur maître (115) de façon à utiliser le module de fréquence radio à courte portée (123) ;
dans lequel un signal de requête d'interruption est généré par le dispositif hôte (100) vers le module de communication sans fil (120) via le premier contact (P4) lorsque le circuit hôte du dispositif électronique (100) indique l'existence du module de fréquence radio (123) en fonction du niveau de signal.

9. La méthode selon la revendication 8, dans laquelle à la suite de la procédure de communication, un signal de requête d'interruption est transmis au module de fréquence radio à courte portée en utilisant le premier contact du connecteur de module.

10. La méthode selon la revendication 9, dans laquelle le signal de requête d'interruption est un pulse.

11. La méthode selon l'une quelconque des revendications 8 à 10, dans laquelle le connecteur hôte comporte une électrode d'entrée de requête d'interruption hôte ; et dans laquelle lorsque le module de communication sans fil est connecté de manière détachable au dispositif électronique , le premier contact est l'électrode d'entrée de requête d'interruption hôte.

12. La méthode selon l'une quelconque des revendications 8 à 11, dans laquelle le module de fréquence radio est un module d'identification de fréquence radio RFID.

13. La méthode selon l'une quelconque des revendications 8 à 11, dans laquelle le module de fréquence radio est un module de communication de champ proche NFC.

14. La méthode selon l'une quelconque des revendications 8 à 13, dans laquelle le module de fréquence radio à courte portée (123) peut adopter un premier module de fréquence radio ou un second module de fréquence radio et dans laquelle l'étape de détermination du type de module de fréquence radio à courte portée (123) du module de communication sans fil détachable (120) comporte :
la détermination du module de fréquence radio à courte portée (123) devant être le premier module de fréquence radio si le niveau de signal prédéterminé est une premier niveau de signal prédéterminé ; et
la détermination du module de fréquence radio à courte portée (123) devant être le second module de fréquence radio si le niveau de signal prédéterminé est un second niveau de signal prédéterminé, dans laquelle le second niveau de signal prédéterminé est différent du premier niveau de signal prédéterminé.
